# EUROPÄISCHE PATENTANMELDUNG

(11) **EP 0 607 837 A1**
(43) Veröffentlichungstag der Anmeldung: **27.07.1994**
(21) Anmeldenummer: 94100281.8
(22) Anmeldetag: 11.01.1994
(51) Int. Cl.: B65G 47/14, B65H 67/06

(54) **Vorrichtung zum Entnehmen, Fördern und Vereinzeln leerer, liegender Garnhülsen**

(30) Priorität: 18.01.1993 DE 4301131
(71) Anmelder: Zinser Textilmaschinen GmbH, D-73058 Ebersbach/Fils (DE)
(72) Erfinder: Rommelspacher, Rolf, D-73110 Hattenhofen (DE); Fähnrich, Dieter, D-73035 Göppingen (DE); Mann, Hans-Ulrich, D-73054 Eislingen (DE); Vetter, Dieter, D-73061 Ebersbach (DE)

(57) **Zusammenfassung**

Die Erfindung bezieht sich auf eine Vorrichtung zum Entnehmen, Fördern und Vereinzeln leerer, liegender Garnhülsen 20 mit einem Steigförderer 1, der mindestens einem wirr liegenden Hülsen enthaltenden Hülsenbehälter 2 mit zum Steigförderer 1 geneigtem Boden 3 nachgeordnet ist, welcher ein Förderband 4 mit einzelnen Hülsenleisten 5 aufweist. Zwischen dem Steigförderer 1 und dem geneigten Boden 3 des Hülsenbehälters 2 ist eine lediglich eine Teilmenge der wirr liegenden Hülsen 20 aufnehmende Hülsenkammer 7 vorhanden, die durch einen dem Steigförderer 1 zugeneigten Boden 8 und eine im stumpfen Winkel dazu angeordnete Rückwand 9 sowie durch die Seitenwände 10, 11 des Hülsenbehälters 2 gebildet wird.

## Beschreibung

Die Erfindung bezieht sich auf eine Vorrichtung zum Entnehmen, Fördern und Vereinzeln leerer, liegender Garnhülsen mit einem Steigförderer, der mindestens einem wirr liegenden Hülsen enthaltenden Hülsenbehälter mit zum Steigförderer geneigten Boden nachgeordnet ist, welcher ein Förderband mit einzelnen Hülsenleisten aufweist.

Als Stand der Technik sind bereits derartige Vorrichtungen bekannt, welche jeweils einen Steigförderer mit ihm vorgeordneten Hülsenbehälter mit geneigtem Boden aufweisen (DE 40 28 160 A1, DE 38 27 797 A1, DE 31 23 997 C2, DE 26 39 531 A1, DE-AS 1 134 011). Hierbei werden verschiedene Maßnahmen angewendet, um die Hülsen vereinzelt zu fördern; beispielsweise können die durch die Mitnehmerleisten und das Förderband gebildeten Hülsentaschen einen so geringen gegenseitigen Abstand voneinander aufweisen, daß jede Hülsentasche zwangsläufig nur eine einzelne Garnhülse aufnehmen kann, oder der Hülsenförderer ist mit einer zusätzlichen Vorrichtung ausgestattet, welche überzählig geförderte Hülsen wieder in den Hülsenbehälter zurückwirft.

Eine weitere Maßnahme besteht darin, die Hülsenleisten nur schmal zu gestalten, um mittels eines mit Hülsenleisten versehenen Steigförderers aus einem wirr liegende Hülsen enthaltenden Hülsenbehälter Hülsen einzeln zu entnehmen. Auf schmalen Hülsenleisten bleiben Hülsen jedoch nur liegen, wenn sie annähernd waagerecht am Steigförderer anliegen. Die Hülsenleisten des umlaufenden Steigförderers wälzen hierbei die wirr liegenden Hülsen laufend um, wobei gelegentlich die für das Erfassen erforderliche Lage einer Hülse erreicht wird. Das Erfassen erfolgt daher zufällig und mit geringer Effizienz.

Der vorliegenden Erfindung liegt demgegenüber die Aufgabe zugrunde, eine Vorrichtung der eingangs genannten Art so weiterzubilden, daß die Wirksamkeit des Erfassens von Hülsen verbessert wird.

Diese Aufgabe wird erfindungsgemäß dadurch gelöst, daß zwischen dem Steigförderer und dem geneigten Boden des Hülsenbehälters eine lediglich eine Teilmenge der wirr liegenden Hülsen aufnehmende Hülsenkammer vorhanden ist, die durch einen dem Steigförderer zugeneigten Boden und eine im stumpfen Winkel dazu angeordnete Rückwand sowie durch die Seitenwände des Hülsenbehälters gebildet wird. Infolge der Schaffung einer Teilmenge ergibt sich eine besonders wirksame Umwälzung der wirr liegenden Hülsen, wobei die einzelnen Hülsen mit höherer Effizienz erfaßt und über die Mitnehmerleisten des Steigförderers einzeln abgefördert werden. Diese Hülsenkammer kann entweder ein Teil des Hülsenbehälters sein oder als selbständiges Element dem Hülsenbehälter zugeordnet werden.

Hierbei kann sich vorteilhafterweise in weiterer Ausgestaltung der Erfindung der Abstand zwischen dem Förderband des Steigförderers und der Rückwand der Hülsenkammer in Laufrichtung des Förderbandes erhöhen. Weiterhin kann der der Hülsenkammer zugeneigte Boden des Hülsenbehälters mindestens in einem an die Hülsenkammer angrenzenden Bereich auch quer zu seiner Neigungsrichtung zur Hülsenkammer geneigt sein.

In weiterer Ausgestaltung der Erfindung kann der quergeneigte Bereich dachartig von einem First ausgehend nach beiden Seiten geneigt sein, wobei der First der Dachform vorteilhafterweise mittig zum Boden des Hülsenbehälters angeordnet ist. Die wirr liegenden Hülsen werden damit bereits vor Eintritt in die Hülsenkammer in grober Lage positioniert und lassen sich leichter von der jeweiligen Mitnehmerleiste des Steigförderers erfassen.

In weiterer Ausgestaltung der Erfindung können der Steigförderer und die Hülsenkammer durch eine sich zwischen ihnen verklemmende Hülse voneinander entfernbar sein; hierdurch wird vermieden, daß sich gelegentlich Hülsen zwischen Steigförderer und Hülsenbehälter verklemmen. Hierbei können der Steigförderer und/oder die Hülsenkammer federnd voneinander trennbar sein oder es kann eine federnde Lagerung des Steigförderers als Gelenk ausgebildet werden, um welches der Steigförderer um einen Winkelbetrag bis maximal 20° von der Hülsenkammer wegschwenkbar ist. Alternativ besteht auch die Möglichkeit, daß die Hülsenkammer federnd vom Steigförderer wegschwenkbar ist.

Die Erfindung wird nachfolgend anhand von in der Zeichnung dargestellten Ausführungsbeispielen näher beschrieben. In der Zeichnung zeigen:
- Fig. 1: eine schematische Seitenansicht eines Hülsenbehälters mit nachgeordnetem Steigförderer, wobei die vorn liegende Seitenwand des Hülsenbehälters entfernt ist;
- Fig. 2: die Ansicht des Hülsenbehälters vom Steigförderer aus;
- Fig. 3: eine andere Ausführungsform des Hülsenbehälters und des Steigförderers, teils geschnitten in schematischer Seitenansicht.

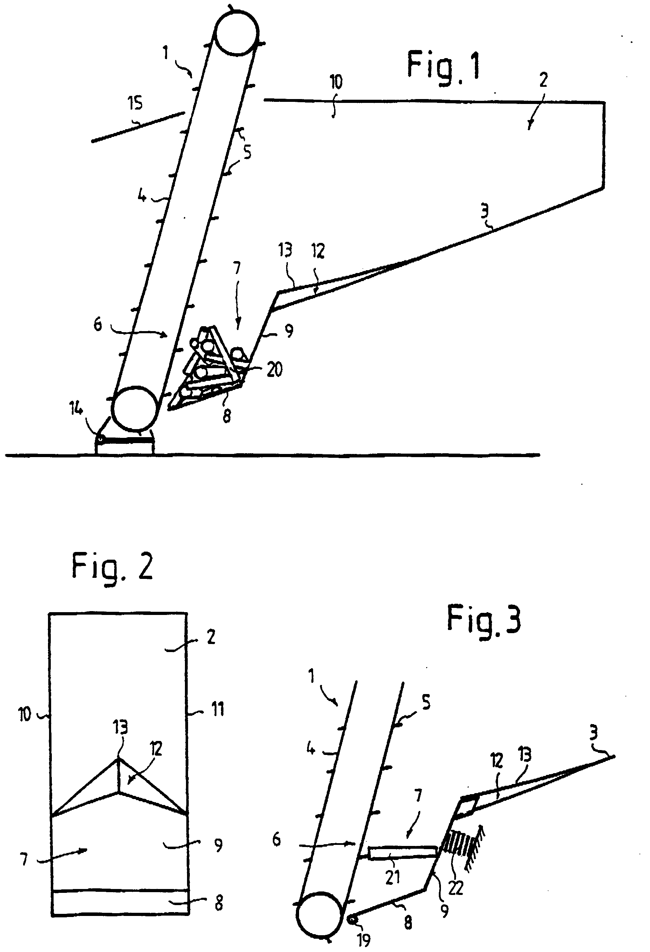

In Fig. 1 ist ein Steigförderer 1 dargestellt, welcher einem Hülsenbehälter 2 nachgeordnet ist. Dieser Hülsenbehälter 2 weist einen zum Steigförderer 1 geneigten Boden 3 auf.

Der Steigförderer besteht aus einem umlaufenden Förderband 4, auf welchem Hülsenleisten 5 angeordnet sind.

Zwischen dem unteren Bereich 6 des Steigförderers 1 und dem geneigten Boden 3 des Hülsenbehälters 2 befindet sich eine Hülsenkammer 7, welche lediglich eine Teilmenge der wirr liegenden Hülsen 20 aufnimmt. Diese Hülsenkammer 7 ist so gestaltet, daß sie einen dem Steigförderer 1 zugeneigten Boden 8 sowie eine im stumpfen Winkel dazu angeordnete Rückwand 9 besitzt. Seitlich ist die Hülsenkammer 7 durch Seitenwände 10 und 11 des Hülsenbehälters 2 gemäß Fig. 2 begrenzt.

Aus Fig. 1 geht hervor, daß sich der Abstand zwischen dem Förderband 4 des Steigförderers 1 und der Rückwand 9 der Hülsenkammer 7 in Laufrichtung des Förderbandes 4 erhöht, so daß die Rückwand 9 und das Förderband 3 in spitzem Winkel zueinander stehen. Der der Hülsenkammer 7 zugeneigte Boden 3 des Hülsenbehälters 2 kann mindestens in einem an die Hülsenkammer 7 angrenzenden Bereich 12 quer zu seiner Neigungsrichtung zur Hülsenkammer 7 geneigt sein.

Der geneigte Bereich 12 kann dachartig von einem First 13 ausgehend nach beiden Seiten geneigt sein. Aus Fig. 2 geht hervor, daS der First 13 der Dachform vorteilhafterweise mittig zum Boden 3 des Hülsenbehälters 2 angeordnet ist. Hierdurch werden die Hülsen vom Boden 3 des Hülsenbehälters 2 vorzugsweise in die Seitenbereiche der Hülsenkammer 7 rutschen; sie liegen dann in das für das Erfassen durch die Hülsenleisten 5 des Steigförderers 2 vorteilhafter Lage.

Um zu vermeiden, daß sich bei der Vorrichtung gemäß Fig. 1 zwischen der Rückwand 9 der Hülsenkammer 7 und dem unteren Bereich 6 des Steigförderers 1 Hülsen verklemmen, kann bei der Ausführungsform nach Fig. 1 der Steigförderer 1 eine federnde Lagerung 14 in Form eines Gelenkes aufweisen. Um dieses Gelenk kann der Steigförderer um einen Winkel bis maximal 20° von der Hülsenkammer 7 wegschwenken, so daß vorteilhafterweise ein unerwünschtes Verklemmen einer einzelnen Hülse in diesem Bereich vermieden wird.

Es bestehen auch die nicht näher dargestellte Möglichkeiten, durch eine verklemmende Hülse den Steigförderer 1 vom Hülsenbehälter 2 oder umgekehrt den Hülsenbehälter vom Steigförderer wegschieben zu lassen. Diese Verschiebebewegung kann durch einen Fühler ertastet werden, welcher dann die Anlage stillsetzt und eine Bedienperson herbeiruft, um die Klemmung zu beheben.

In manchen Fällen ist nach Fig. 3 auch eine Ausführung vorteilhaft, bei der mindestens die Rückwand 9 der Hülsenkammer 7 nachgiebig gehaltert ist. Hierzu kann beispielsweise das untere Ende des Bodens 8 der Hülsenkammer 7 in einem Lager 19 schwenkbar gelagert und die Rückwand 9 der Hülsenkammer 7 durch eine Feder 22 unterstützt sein. Durch eine sich einklemmende Hülse 21 wird dann die Rückwand 9 zurückgedrückt und eine Beschädigung vermieden.

Es besteht auch die nicht näher dargestellte Möglichkeit, dem Steigförderer 1 mehrere Hülsenbehälter 2 mit entsprechenden Hülsenkammern 7 zuzuordnen, z.B. durch Anordnung mehrerer Hülsenbehälter und Hülsenkammern übereinander.

Wesentlich ist, daß die Abmessungen der Hülsenkammer 7 auf die Länge der jeweils verwendeten Hülsen abgestellt sind. Für Hülsen mit einer Länge von beispielsweise 230 mm haben sich die folgenden Maße als vorteilhaft erwiesen: Tiefe der Hülsenkammer 7 zwischen Steigförderer 1 und Rückwand 9 von 150 bis 200 mm; Höhe der Hülsenkammer 7 zwischen Boden 8 und Unterkante des Behälterbodens 3 von 170 bis 230 mm; "Firsthöhe" des Behälterbodens 3 von 40 bis 60 mmm; Neigung des Bodens 8 der Hülsenkammer 7 zur Waagerechten von 15 bis 30°; Rückhang der Rückwand 9 gegenüber dem Steigförderer 1 von 10 bis 15°; Breite der Hülsenkammer: das 1,5 bis 2-fache der Hülsenlänge.

## Patentansprüche

1. Vorrichtung zum Entnehmen, Fördern und Vereinzeln leerer, liegender Garnhülsen mit einem Steigförderer, der mindestens einem wirr liegenden Hülsen enthaltenden Hülsenbehälter mit zum Steigförderer geneigten Boden nachgeordnet ist, welcher ein Förderband mit einzelnen Hülsenleisten aufweist,
dadurch gekennzeichnet,
daß zwischen dem Steigförderer (1) und dem geneigten Boden (3) des Hülsenbehälters (2) eine lediglich eine Teilmenge der wirr liegenden Hülsen (20) aufnehmende Hülsenkammer (7) vorhanden ist, die durch einen dem Steigförderer (1) zugeneigten Boden (8) und eine im stumpfen Winkel dazu angeordnete Rückwand (9) sowie durch Seitenwände (10, 11) des Hülsenbehälters (2) gebildet ist.

2. Vorrichtung nach Anspruch 1,
dadurch gekennzeichnet,
daß sich der Abstand zwischen dem Förderband (4) des Steigförderers (1) und der Rückwand (9) der Hülsenkammer (7) in Laufrichtung des Förderbandes (4) erhöht.

3. Vorrichtung nach einem der vorhergehenden Ansprüche,
dadurch gekennzeichnet,
daß der der Hülsenkammer (7) zugeneigte Boden (3) des Hülsenbehälters (2) mindestens in einem an die Hülsenkammer (7) angrenzenden Bereich (12) auch quer zu seiner Neigungsrichtung zur Hülsenkammer (7) geneigt ist.

4. Vorrichtung nach Anspruch 3,
dadurch gekennzeichnet,
daß der quergeneigte Bereich (12) dachartig von einem First (13) ausgehend nach beiden Seiten geneigt ist.

5. Vorrichtung nach Anspruch 3 und 4,
dadurch gekennzeichnet,
daß der First (13) der Dachform mittig zum Boden (3) des Hülsenbehälters angeordnet ist.

6. Vorrichtung nach Anspruch 1,
dadurch gekennzeichnet,
daß der Steigförderer (1) und die Hülsenkammer (7) durch eine sich zwischen ihnen verklemmende Hülse voneinander entfernbar sind.

7. Vorrichtung nach Anspruch 6,
dadurch gekennzeichnet,
daß der Steigförderer (1) und/oder die Hülsenkammer (7) federnd voneinander trennbar sind.

8. Vorrichtung nach Anspruch 6 und 7,
dadurch gekennzeichnet,
daß eine federnde Lagerung (14) des Steigförderers (1) als Gelenk ausgebildet ist, um welches der Steigförderer (1) um einen Winkelbetrag bis maximal 20° von der Hülsenkammer (7) wegschwenkbar ist.

9. Vorrichtung nach Anspruch 7,
dadurch gekennzeichnet,
daß die Hülsenkammer (7) federnd von dem Steigförderer (1) wegschwenkbar ist.

10. Vorrichtung nach einem der vorhergehenden Ansprüche,
dadurch gekennzeichnet,
daß die Abmessungen der Hülsenkammer (7) auf die Hülsenlänge abgestellt sind.

11. Vorrichtung nach Anspruch 10,
mit einer Hülsenlänge von 230 mm,
dadurch gekennzeichnet,
daß die Tiefe der Hülsenkammer (7) zwischen Steigförderer (6) und Rückwand (9) von 150 bis 200 mm, die Höhe der Hülsenkammer (7) zwischen Boden (8) und Unterkante des Behälterbodens von 170 bis 230 mm, die Neigung des Bodens (8) der Hülsenkammer (7) zur Waagerechten von 15 bis 30°, der Rückhang der Rückwand (9) gegenüber dem Steigförderer (1) von 10 bis 15° und die Breite der Hülsenkammer das 1,5 - 2fache der Hülsenlänge beträgt.

12. Vorrichtung nach Anspruch 11,
dadurch gekennzeichnet,
daß die Firsthöhe des Behälterbodens (3) von 40 bis 60 mm beträgt.
